# FASCICULE DE BREVET EUROPEEN

(11) **EP 1 742 999 B1**
(45) Date de publication et mention de la délivrance du brevet: **29.08.2007**
(21) Numéro de dépôt: 05767615.7
(22) Date de dépôt: 03.05.2005
(51) Int. Cl.: C08L 95/00, C08K 5/20, E01C 7/24

(54) **ÉMULSION AQUEUSE BITUMINEUSE**
WÄSSRIGE BITUMENEMULSION
AQUEOUS BITUMEN EMULSION

(30) Priorité: 04.05.2004 FR 0404758
(43) Date de publication de la demande: 17.01.2007
(73) Titulaire: Eiffage Travaux Publics, 93330 Neuilly Sur Marne (FR)
(72) Inventeur: ANTOINE, Jean-Pierre, F-69340 Francheville (FR); MARCILLOUX, Jérôme, F-69360 Saint-Symphorien d'Ozon (FR); PLUSQUELLEC, Daniel, F-35230 Noyal Chatillon sur Seiche (FR); BENVEGNU, Thierry, F-35700 Rennes (FR); GOURSAUD, Fabrice, F-37320 Esvres sur Indre (FR)
(74) Mandataire: Bezault, Jean
(86) Numéro de dépôt international: PCT/FR2005/001104
(87) Numéro de publication internationale: WO 2005/121252

(56) Documents cités:
- EP-A- 0 750 904
- US-A- 3 422 026

## Description

L'invention concerne des émulsions aqueuses bitumineuses.

L'utilisation d'émulsions aqueuses de bitume pour l'entretien ou la fabrication de chaussées est connue depuis le début du XX^{ème} siècle.

Ces technologies permettent d'utiliser le bitume à une température dite « froide », c'est-à-dire en dessous d'une température de 100°C qui provoquerait une évaporation de la phase aqueuse.

À l'heure actuelle, les agents tensioactifs utilisés pour la fabrication de ces émulsions sont de types anioniques, cationiques, amphotères ou non ioniques.

En fonction des granulats utilisés pour la réalisation de la chaussée et du degré de sollicitation de celle-ci, on sélectionne l'agent tensioactif le plus approprié.

En Europe, et plus particulièrement en France, l'utilisation d'émulsifiants cationiques d'un pH inférieur à 7 est très développée, car ces émulsifiants permettent une interaction de bonne qualité avec la majeure partie des granulats disponibles.

Par ailleurs, plus de 70% des émulsions fabriquées sont utilisées en répandage dans les techniques d'enduit ou de couche d'accrochage.

Toutefois, les techniques d'enrobage à base d'émulsion, qui représentent 30 % de la production, tendent à se développer. Si des techniques comme les graves émulsion et les enrobés coulés à froid sont utilisées industriellement, le développement de bétons bitumineux à froid, ou plus généralement à l'émulsion, commence à devenir important.

Dans tous les cas, une rupture contrôlée de l'émulsion après application est souhaitable afin de maîtriser l'évolution des caractéristiques du revêtement.

Ainsi, dans le cas des enduits superficiels, les caractéristiques souhaitables de l'émulsion sont une rupture rapide de l'émulsion après répandage et la formation d'un film homogène de bitume capable de coller de façon quasi irréversible les granulats.

Il est important de remarquer que la rupture de l'émulsion ne doit se produire qu'au moment du répandage, et non lors de la fabrication, du stockage ou du transport.

En ce qui concerne les enrobés à l'émulsion, cette dernière doit rester stable le temps du stockage, du pompage puis du mélangeage aux granulats. La rupture doit alors se produire progressivement afin de permettre la mise en oeuvre de l'enrobé tout en assurant la viabilité immédiate de la chaussée. La mise en circulation se fait en effet, le plus souvent, juste après la réalisation.

Afin d'obtenir ces compromis, les molécules de tensioactifs les plus couramment utilisées sont des polyamines, des amidoamines ou des imidazolines acidifiées.

À l'heure actuelle, une forte majorité des tensioactifs proposés sont obtenus à partir de la réaction d'une polyamine sur un dérivé d'acide gras.

Dans tous les cas, les polyamines sont issues de l'industrie pétrolière, alors que, dans la majorité des cas, les acides gras sont d'origine animale. Certains fournisseurs ont développé des molécules dont la chaîne grasse vient de végétaux oléagineux (colza, tournesol, soja, lin, copra, palme, etc.), mais la tête polaire aminée provient de l'industrie pétrolière.

Les seules tentatives de tensioactifs à 100% végétaux ont été effectuées en formant un ester à partir d'un acide gras et d'un ou de deux motifs glucose appelés couramment APG (Alkyles PolyGlucosides). Mais ces molécules, lorsqu'elles sont mises en oeuvre avec du bitume, ne permettent pas d'obtenir une émulsion stable.

Pourtant, l'utilisation de molécules d'origine végétale présente un certain nombre d'avantages résultant de l'utilisation de matières renouvelables, contribuant à la réduction de l'effet de serre, et aussi d'une plus grande biodégradabilité.

L'observation des fiches de données de sécurité des tensioactifs, tels que décrits ci-dessus, laisse apparaître une très grande toxicité vis-à-vis de l'environnement.

Le but principal de l'invention est d'éviter ces inconvénients environnementaux en proposant des agents tensioactifs entièrement végétaux.

À la différence des alkyles polyglucosides (APG) dont l'efficacité est faible, des tensioactifs utilisant la glycine bétaïne comme tête polaire ont prouvé leur bonne capacité à émulsionner le bitume.

La glycine bétaïne est un sous-produit de l'industrie sucrière qui est issu de la betterave. La chaîne grasse du tensioactif est issue de triglycérides constituant les huiles végétales. Ces triglycérides peuvent être transestérifiés afin d'obtenir un ester gras, lui-même susceptible d'être transformé en alcool gras ou en amine grasse qui va réagir avec la fonction carboxylique de la glycine bétaïne.

Le tensioactif ainsi obtenu est du type cationique, le contre-ion provenant de l'acide nécessaire à la synthèse.

Afin de faire varier la stabilité de l'émulsion aux variations de pH possibles à la surface des granulats, des esters
ou des amides de la glycine bétaïne peuvent être utilisés dans le cadre de l'invention. Du fait que l'ester peut s'hydrolyser à un pH supérieur ou égal à 7, l'amide pourra lui être préféré.

Par ailleurs, pour des raisons de facilité de manipulation, l'origine de l'huile végétale pourra être sélectionnée. La teneur en insaturations est en effet directement liée au caractère solide ou liquide du produit final.

Les chaînes grasses biodégradables issues du colza, du soja, du tournesol ou du lin peuvent être avantageusement retenues, les tensioactifs étant le plus souvent liquides ou pâteux.

Utilisées dans des proportions identiques à celles des tensioactifs de la technique antérieure, ces molécules conduisent à des émulsions stables. Les émulsions obtenues avec ces tensioactifs présentent une bonne adhésivité aux granulats, ce qui les rend particulièrement intéressantes comme émulsions aqueuses bitumineuses en particulier pour des travaux routiers.

L'invention concerne plus particulièrement une émulsion aqueuse bitumineuse, contenant du bitume et un agent tensioactif, dans laquelle l'agent tensioactif comprend au moins un composé de formule (1)

X⁻ (CH₃)₃N⁺-CH₂-CO-Z-R (1)

X étant un radical sulfonate,
R étant un radical monovalent de formule C₂ₙH₂(₂ₙ₋ₘ)+1 contenant
2n atomes de carbone et m doubles liaisons, avec 9 ≤ n ≤ 11,
0 ≤ m ≤ 3 si n = 9 et 0 ≤ m ≤ 1 si n > 9, et
Z étant choisi parmi un atome d'oxygène et un groupe -NH-.

De préférence, l'agent tensioactif comprend au moins un composé choisi parmi ceux des formules (2), (3) et (4)

RZH (2)

XH (3)

X⁻ (CH₃)₃N⁺-CH₂-CO-OH (4)

un composé de formule XH étant combiné le cas échéant à au moins un composé de formule RNH₂ pour former au moins un composé de formule X⁻ RN⁺H₃.

Avantageusement, l'agent tensioactif selon l'invention comprend pratiquement exclusivement des composés desdites formules (1), (2), (3) et (4).

Des caractéristiques optionnelles de l'invention, complémentaires ou de substitution, sont énoncées ci-après:
- m = 0 et les composés constituant l'agent tensioactif sont les suivants, dans les pourcentages en poids indiqués:

| | |
|---|---|
| X⁻ (CH₃) ₃N⁺-CH₂-CO-O-R | 50 ± 10 |
| ROH | 19 ± 10 |
| XH | 23 ± 10 |
| X⁻ (CH₃) ₃N⁺-CH₂-CO-OH | 0 à 18. |

- m = 0 et les composés constituant l'agent tensioactif sont les suivants, dans les pourcentages en poids indiqués:

| | |
|---|---|
| X⁻ (CH₃)₃N⁺-CH₂-CO-O-R | 72 ± 10 |
| ROH | 0 à 20 |
| XH | 0 à 18 |
| X⁻ (CH₃) ₃N⁺-CH₂-CO-OH | 0 à 20. |

- m = 0 et les composés constituant l'agent tensioactif sont les suivants, dans les pourcentages en poids indiqués:

| | |
|---|---|
| X⁻ (CH₃)₃N⁺-CH₂-CO-O-R | 80 ± 10 |
| ROH | 20 ± 10. |

- m = 0 et les composés constituant l'agent tensioactif sont les suivants, dans les pourcentages en poids indiqués:

| | |
|---|---|
| X⁻(CH₃)₃N+-CH₂-CO-O-R | 70 ± 10 |
| ROH | 26 ± 10 |
| XH | 0 à 14. |

- m > 0 et les composés constituant l'agent tensioactif sont les suivants, dans les pourcentages en poids indiqués:

| | |
|---|---|
| X⁻ (CH₃)₃N⁺-CH₂-CO-O-R | 48 ± 10 |
| ROH | 36 ± 10 |
| XH | 14 ± 10 |
| X⁻ (CH₃)₃N⁺-CH₂-CO-OH | 0 à 12. |

- m = 0 et les composés constituant l'agent tensioactif sont les suivants, dans les pourcentages en poids indiqués:

| | |
|---|---|
| X⁻ (CH₃)₃N⁺-CH₂-CO-NH-R | 58 ± 10 |
| X⁻ RN⁺H₃ | 35 ± 10 |
| X⁻ (CH₃) ₃N⁺-CH₂-CO-OH | 0 à 20. |

- m > 0 et les composés constituant l'agent tensioactif sont les suivants, dans les pourcentages en poids indiqués:

| | |
|---|---|
| X⁻ (CH₃)₃N⁺-CH₂-CO-NH-R | 56 ± 10 |
| X⁻ RN⁺H₃ | 31 ± 10 |
| RNH₂ | 0 à 18 |
| X⁻ (CH₃)₃N⁺-CH₂-CO-OH | 0 à 15. |

- X est choisi parmi les radicaux méthanesulfonate, paratoluènesulfonate et camphosulfonate.
- l'émulsion comprend en outre un acide, en particulier de l'acide chlorhydrique, dans une proportion inférieure à 0,25 % en poids.
- l'émulsion comprend en outre un un polymère hydrosoluble, en particulier de l'alcool polyvinylique, dans une proportion de 0,1 à 2 % en poids de l'émulsion.

Sous un autre aspect l'invention concerne l'utilisation d'une émulsion telle que définie ci-dessus pour la réalisation d'enduits superficiels, de couches d'accrochage, d'imprégnation, d'enrobés denses, semi-denses, coulés à froid ou stockables.

Un premier type d'agents tensioactifs contenu dans l'émulsion selon l'invention est à base d'esters gras de la glycine bétaïne

Le procédé de préparation de ces mélanges consiste à mettre en réaction la glycine bétaïne avec 2 à 3 équivalents molaires d'un acide sulfonique et 1 à 1,5 équivalent molaire d'un alcool gras saturé de type C_{18:0}, C_{20:0} ou C_{22:0} ou d'un alcool gras insaturé de type C_{18:1}, C_{18:2}, C_{18:3}, C_{20:1} ou C_{22:1}, le chiffre qui suit ":" représentant le nombre de liaisons carbone-carbone. La réaction d'estérification de la glycine bétaïne présente sous forme zwitterionique nécessite une protonation préalable de sa fonction carboxylate. L'acide de la bétaïne réagit avec l'alcool gras en présence de l'excès d'acide pour conduire aux esters correspondants. Cette réaction s'effectue en l'absence de tout solvant, l'alcool gras utilisé constituant à la fois le réactif et le milieu.

De préférence, la réaction est mise en oeuvre à une température comprise entre 130 et 140 °C, pendant 6 à 8 heures. L'eau formée au cours de la réaction est éliminée en continu sous pression réduite, de préférence entre 50 et 100 mbar.

Les bruts réactionnels résultant de la mise en oeuvre du procédé décrit permettent d'accéder à des mélanges constitués d'ester gras de la glycine bétaïne, d'alcool gras résiduel, d'acide sulfonique résiduel et de glycine bétaïne résiduelle présente sous forme protonée, ces constituants étant affectés des coefficients a, b, c et d respectivement, dont les valeurs peuvent être déterminées par spectroscopie de RMN ¹H.

Lorsqu'un alcool gras saturé est utilisé dans la réaction, une purification rapide partielle basée sur la différence de solubilité entre l'alcool gras et l'ester synthétisé consiste en la reprise du brut réactionnel à l'aide de solvants organiques tels que l'éther diéthylique, l'éthanol
ou le n-butanol en fin de réaction. L'ester, insoluble dans les solvants tels que l'éther diéthylique ou l'éthanol ou partiellement soluble dans le butanol, précipite et l'alcool gras se solubilise partiellement. Par filtration, on obtient des poudres majoritairement constituées d'ester dont la composition massique peut être déterminée par spectroscopie de RMN ¹H.

Suivant le solvant organique utilisé pour le lavage des bruts réactionnels, les coefficients a, b, c et d varient. L'utilisation des alcools à chaînes carbonées courtes permet d'accéder à des mélanges où les coefficients c et d sont environ égaux à zéro, l'utilisation de l'éther diéthylique permet d'accéder à des mélanges présentant un taux d'alcool gras saturé résiduel (b) faible. La grande solubilité des alcools gras insaturés et de leurs esters correspondants dans les solvants organiques ne permet pas d'appliquer la méthode décrite et seuls sont accessibles les mélanges sous forme de bruts réactionnels.

On peut purifier les esters gras de la glycine bétaïne par chromatographie des mélanges selon l'invention sur colonne de gel de silice à l'aide d'éluants polaires ternaires de type acétate d'éthyle/isopropanol/.eau.

Les esters gras de la glycine bétaïne présentent une fonction hydrolysable entre la chaîne grasse et l'ammonium quaternaire. L'étude de leur comportement en milieu aqueux permet d'apporter une information importante concernant leur biodégradabilité. La stabilité des dérivés est étudiée par chromatographie en phase gazeuse, en dosant l'alcool gras produit au cours de la réaction d'hydrolyse en solution aqueuse tampon dont le pH est fixé à diverses valeurs.

La mesure des tensions superficielles et des concentrations micellaires critiques prouvent que les dérivés synthétisés sont doués de propriétés amphiphiles qui permettent d'utiliser les mélanges proposés comme agents tensioactifs (notamment comme émulsifiants).

L'autre famille d'agents tensioactifs contenus dans l'émulsion selon l'invention est à base d'amide gras de la glycine bétaïne.

Le procédé de préparation de ces mélanges fait appel dans un premier temps à la réaction de la glycine bétaïne avec 1 à 1,3 équivalent molaire d'un acide sulfonique et 2 à 4 équivalents molaires de n-butanol constituant à la fois le réactif et le milieu, pour former l'ester n-butylique sous forme de sulfonate intermédiaire. De préférence, la première étape est réalisée à une température comprise entre 130 et 140 °C, au reflux du n-butanol, pendant 3 à 5 heures et sous pression atmosphérique. La distillation lente du n-butanol permet l'élimination azéotropique de l'eau formée au cours de la réaction. Au mélange refroidi à température ambiante est ensuite ajouté 1 à 1,2 équivalent molaire d'une amine grasse saturée de type C_{18:0}, C_{20:0} ou C_{22:0} ou d'une amine grasse insaturée de type C_{18:1}, C_{18:2}, C_{18:3}, C_{20:1} ou C_{22:1}. Le milieu réactionnel est chauffé sous pression réduite pour éliminer le n-butanol et l'aminolyse est menée pendant 2 à 4 heures, à 130 °C, entre 50 et 100 mbar.

La formation du sel d'amine grasse résultant de la protonation de l'amine par l'excès d'acide peut être limitée par l'utilisation de 0,1 à 0,4 équivalent molaire d'une base organique forte et encombrée telle que la dibutylamine ajoutée avant l'amine grasse.

Les bruts réactionnels résultant de la mise en oeuvre du procédé décrit permettent d'accéder à des mélanges constitués d'amide gras de la glycine bétaïne, du sulfonate de l'amine grasse utilisée lors de l'aminolyse, d'un faible résidu d'amine grasse et de glycine bétaïne résiduelle présente sous forme protonée, ces constituants étant affectés des coefficients e, f, g et h respectivement, dont les valeurs peuvent être déterminées par spectroscopie de RMN ¹H.

Lorsqu'une amine grasse saturée est utilisée dans la réaction, une purification rapide partielle basée sur la différence de solubilité entre l'amine grasse et l'amide synthétisé consiste en la reprise du brut réactionnel à l'aide d'éther diéthylique, en fin de réaction. L'amide et le sel de l'amine grasse insolubles dans le solvant précipitent et l'amine grasse se solubilise. Par filtration, on obtient des poudres majoritairement constituées d'amide dont la composition massique peut être déterminée par spectroscopie de RMN ¹H. L' utilisation de l'éther diéthylique permet d'accéder à des mélanges présentant un taux d'amine grasse saturée résiduelle (g) environ égal à zéro. La reprise des bruts réactionnels à l'aide d'alcools à chaînes carbonées courtes tels que l'éthanol ou le n-butanol entraîne la solubilisation des résidus.

La grande solubilité des amines grasses insaturés et des amides correspondants dans les solvants organiques ne permet pas d'appliquer la méthode décrite et seuls sont accessibles les mélanges sous forme de bruts réactionnels.

On peut purifier les amides gras de la glycine bétaïne par chromatographie des mélanges selon l'invention sur colonne de gel de silice à l'aide d'éluants polaires ternaires de type acétate d'éthyle/isopropanol/eau.

La mesure des tensions superficielles et des concentrations micellaires critiques prouve que les dérivés amides synthétisés sont également doués de propriétés amphiphiles qui permettent d'utiliser les mélanges proposés comme agents tensioactifs (notamment comme émulsifiants).

Les dérivés esters et amides de la glycine bétaïne présentent de bonnes propriétés tensioactives avec des tensions superficielles et des concentrations micellaires critiques relativement basses. Ces dérivés suivant l'invention présentent des tensions superficielles du même ordre de grandeur que les tensioactifs de référence comme les alkylpolyglucosides (APG) mentionnés précédemment. Par rapport à ces dérivés commerciaux, on obtient des concentrations micellaires critiques plus faibles, ce qui présente un intérêt majeur. Il faut en effet moins de produit pour obtenir des solutions micellaires.

En présence d'eau, ces dérivés s'hydratent plus ou moins bien selon la condensation en carbone des chaînes. Ils permettent ainsi d'homogénéiser un mélange eau-huile en agissant sur les interactions à la fois hydrophiles (tensioactif/eau) et lipophiles (tensioactif/huile). Ils permettent la formulation d'émulsions très stables, y compris pour les faibles concentrations en tensioactif, pour des rapports eau/tensioactif/huile variables et pour des huiles de différentes nature (en particulier les esters méthyliques d'acides gras).

Ces tensioactifs monocaténaires se révèlent très intéressants dans les émulsion aqueuses bitumineuses.

L'invention est davantage illustrée par les exemples suivants.

### Exemple 1: Synthèse du mésylate de bétaïnate d'octadécyle et préparation des mélanges correspondants.

À une suspension de glycine bétaïne (25 g, 0,213 mole) dans l'acide méthanesulfonique (53,3 g, 0,555 mole) est ajouté de l'octadécanol (69,3, g, 0,256 mole). Le mélange ainsi obtenu est progressivement chauffé à 130 °C sous pression réduite (50 à 60 mbars) pour éliminer l'eau formée au cours de la réaction d'estérification. Le mélange devient homogène au bout de 1 à 2 heures d'agitation à la même température. Après 7 heures, le milieu est refroidi à température ambiante.

Méthode A: Le brut réactionnel obtenu (143 g) constitue une première composition selon l'invention..

Méthode B: Le brut réactionnel obtenu est lavé à l'éther diéthylique (600 ml) jusqu'à la reprise complète du résidu.
Le précipité obtenu est ensuite filtré sur büchner et rincé à plusieurs reprises avec le même solvant (2 □.200 ml). Le produit est séché sous vide et 96 g d'une poudre blanche sont finalement obtenus.

Méthode C: Le brut réactionnel obtenu est lavé à l'éthanol (800 ml) jusqu'à la reprise complète du résidu. Le précipité obtenu est ensuite filtré sur büchner et rincé à plusieurs reprises avec le même solvant (2 □.200 ml). Le produit est séché sous vide et 87 g d'une poudre blanche sont finalement obtenus.

Méthode D: Le brut réactionnel obtenu est lavé au n-butanol (900 ml) jusqu'à la reprise complète du résidu. Le précipité obtenu est ensuite filtré sur büchner et rincé à plusieurs reprises avec le même solvant (2 □ 200 ml). Le produit est séché sous vide et 42 g d'une poudre légèrement teintée de gris sont finalement obtenus.

La composition de chaque mélange est évalué par RMN du proton en mesurant les rapports d'intégration entre les différents constituants Les spectres RMN sont enregistrés sur un appareil Bruker ARX-400. Les spectres RMN ¹H sont obtenus à 400 MHz (s = singulet, d = doublet, t = triplet, m = multiplet, 1 = large). Les spectres RMN ¹³C sont obtenus à 100 MHz dans le mode découplage du proton. Les déplacements chimiques sont donnés en ppm par rapport à du TMS interne (échelle δ) et les constantes de couplage (J) en Hz.

RMN ¹H du brut réactionnel (CDCl₃+CD₃OD, 1/1): δ 0,84 (t, CH₃ ester + CH₃ alcool, ³J 6,7 Hz), 1,22 (sl, (CH₂)₁₅CH₃ ester + (CH₂)₁₅CH₃ alcool), 1, 51 (m, CH₂CH₂O alcool), 1,65 (m, CH₂CH₂O ester), 2,73 (s, CH₃SO₃⁻ ester + CH₃SO₃⁻ acide + CH₃SO₃⁻ glycine bétaïne), 3,29 (s, (CH₃)₃ ester + (CH₃)₃ glycine bétaïne), 3,51 (t, CH₂CH₂O alcool, ³J 6,7 Hz), 4, 20 (t, CH₂CH₂O ester, ³J 6, 8 Hz), 4,25 (s, CH₂CO glycine bétaïne), 4,33 (s, CH₂CO ester).

### Composition des mélanges

| Méthode de traitement | a | b | c | d |
|---|---|---|---|---|
| A | 50 | .19 | 23 | 8 |
| B | 72 | 10 | 8 | 10 |
| C | 80 | 20 | 0 | 0 |
| D | 70 | 26 | 4 | 0 |

| | | | | |
|---|---|---|---|---|
| a, b, c et d sont exprimés en pourcentage massique. | | | | |

Le brut réactionnel ou le produit issu de la méthode de traitement B est chromatographié sur colonne de gel de silice (acétate d'éthyle-isopropanol-eau (6,2:3:0,8)) pour donner environ 70 g de mésylate de bétaïnate d'octadécyle. 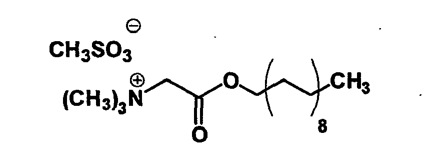 C₂₄H₅₁NO₅S; M = 465,74 g/mol
Solide blanc; rendement: ≅ 70%
CCM: Rf 0,39 (acétate d'éthyle-isopropanol-eau (6:3:1))
IR (nujol) v (cm⁻¹): 1755 (C=O)
   RMN ¹H (CDCl₃+CD₃OD, 1/1):
δ 0,83 (t, 3H, CH₃, ³J 6,7 Hz), 1,22 (sl, 30H, (CH₂)₁₅CH₃), 1,65 (m, 2H, CH₂CH₂O), 2,70 (s, 3H, CH₃SO₃⁻), 3,29 (s, 9H, (CH₃)₃), 4,20 (t, 2H, CH₂CH₂O, ³J 6,7 Hz), 4,34 (s, 2H, CH₂CO).
RMN ¹³C (CDCl₃+CD₃OD, 1/1) :
δ 14,33 (CH₃), 23, 17, 26, 22, 28, 82, 29, 71, 29, 88, 30, 02, 30,08, 30,19, 32,45 (CH₂ aliph.), 39,50 (CH₃SO₃⁻), 54,18 ((CH₃)₃), 63,46 (CH₂CH₂O), 67,27 (CH₂CO), 165,24 (CH₂CO).

### Exemple 2: Synthèse du mésylate de bétaïnate de 9-octadécényle et préparation du mélange correspondant.

À une suspension de glycine bétaïne (30 g, 0,256 mole) dans l'acide méthanesulfonique (61,523 g, 0,64 mole) est ajouté de l'alcool oléïque (96,25 g, 0,359 mole). Le mélange ainsi obtenu est progressivement chauffé à 130 °C sous pression réduite (50 à 100 mbars) pour éliminer l'eau formée au cours de la réaction d'estérification. Le mélange devient homogène au bout de 1 à 2 heures d'agitation à la même température.. Après 7 heures, le milieu est refroidi à température ambiante. Le brut réactionnel obtenu (210 g) constitue une composition selon l'invention.
RMN ¹H du brut réactionnel (CDCl₃):
δ 0,83 (t, CH₃ ester + CH₃ alcool, ³J 6,8 Hz), 1,22 (sl, CH₃(CH₂)₆CH₂CH=CHCH₂(CH₂)₅CH₂CH₂O ester + alcool), 1,50 (m, CH₂CH₂O alcool), 1,64 (m, CH₂CH₂O ester), 1,94 (m, CH₂CH=CHCH₂ ester + CH₂CH=CHCH₂ alcool), 2,74 (s, CH₃SO₃⁻ ester + CH₃SO₃⁻ acide + CH₃SO₃⁻ glycine bétaïne), 3, 30 (s, (CH₃)₃ ester + (CH₃)₃ glycine bétaïne), 3,51 (t, CH₂CH₂O alcool, ³J 6,7 Hz), 4,19 (t, CH₂CH₂O ester, ³J 6,8 Hz), 4,24 (s, CH₂CO glycine bétaïne), 4,32 (s, CH₂CO ester), 5,30 (m, CH₂CH=CHCH₂ ester + CH₂CH=CHCH₂ alcool).

### Composition du mélange

| Méthode de traitement | a | b | c | d |
|---|---|---|---|---|
| A | 48 | 36 | 14 | 2 |

| | | | | |
|---|---|---|---|---|
| a, b, c et d sont exprimés en pourcentage massique. | | | | |

Le brut réactionnel est chromatographié sur colonne de gel de silice (acétate d'éthyle-isopropanol-eau (6,2:3:0,8 puis 6:3:1)) pour donner environ 100 g de mésylate de bétaïnate de 9-octadécényle. 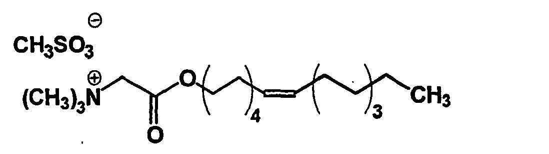 C₂₄H₄₉NO₅S; M=463, 72 g/mol
Huile visqueuse jaune; rendement: ≅ 85%
CCM: Rf 0,4 (acétate d'éthyle-isopropanol-eau (6:3:1))
IR (nujol) ν (cm⁻¹): 1755 (C=O); 1650 (C=C)
   RMN ¹H (CDCl₃) :
δ 0,83 (t, 3H, CH₃, ³J 6, 8 Hz), 1,22 (sl, 22H, CH₃(CH₂)₆CH₂CH=CHCH₂(CH₂)₅CH₂CH₂O), 1, 64 (m, 2H, CH₂CH₂O), 1, 94 (m, 4H, CH₂CH=CHCH₂), 2,71 (s, 3H, CH₃SO₃⁻), 3, 30 (s, 9H, (CH₃)₃), 4, 19 (t, 2H, CH₂CH₂O, ³J 6,8 Hz), 4, 32 (s, 2H, CH₂CO), 5, 31 (m, 2H, CH₂CH=CHCH₂).
RMN ¹³C (CDCl₃) :
δ 14,21 (CH₃), 22,90, 25, 89, 27,40, 28, 49, 29,38, 29,52, 29,62, 29, 73, 29, 86, 29,91, 29,96, 32,13, 32,81 (CH₂ aliph.), 39,27 (CH₃SO₃⁻), 54,09 ((CH₃)₃), 63,22 (CH₂CH₂O), 67,09 (CH₂CO), 129, 93, 130,24 (CH₂CH=CHCH₂), 164, 88 (CH₂CO).

### Exemple 3: Synthèse du mésylate de bétaïnylaminooctadécane et préparation d'un mélange correspondant.

Une suspension de glycine bétaïne (25 g, 0,213 mole) dans le n-butanol (59 ml, 0,64 mole) est réalisée en présence d'acide méthanesulfonique (22,56 g, 0,235 mole). Le mélange réactionnel est porté au reflux du n-butanol à 140 °C. Le milieu devient homogène au bout de 3 à 4 heures d'agitation. Au mélange refroidi à température ambiante est ajoutée de la dibutylamine (8,27 g, 0,064 mole) et le milieu est agité 15 minutes environ. De l'octadécylamine est ensuite ajoutée (69 g, 0,256 mole), puis le n-butanol est éliminé sous pression réduite. L'aminolyse est menée à 130 °C sous pression réduite (50 à 100 mbars). Après 3 heures, le milieu est refroidi à température ambiante. Le brut réactionnel obtenu est lavé à l'éther diéthylique (1600 ml) jusqu'à la reprise complète du résidu. Le précipité obtenu est ensuite filtré sur büchner et rincé à plusieurs reprises avec le même solvant (2 □.200 ml). Le produit est séché sous vide et 98 g d'une poudre blanche d'une composition tensioactive selon l'invention sont finalement obtenus.
RMN ¹H du mélange obtenu (CDCl₃+CD₃OD, 1/1):
δ 0,90 (t, CH₃ amide + CH₃ sel d'amine, ³J 6,7 Hz), 1,29 (sl, (CH₂)₁₅CH₃ amide + (CH₂)₁₅CH₃ sel d'amine), 1,56 (m, CH₂CH₂NH amide), 1,67 (m, CH₂CH₂NH₃⁺ sel d'amine), 2,78 (s, CH₃SO₃⁻ amide + CH₃SO₃⁻ sel d'amine + CH₃SO₃- glycine bétaïne), 2,91 (m, CH₂CH₂NH₃⁺ sel d'amine), 3,26 (m, CH₂CH₂NH amide), 3,30 (s, (CH₃) glycine bétaïne), 3,35 (s, (CH₃)₃ amide), 3,82 (s, CH₂CO glycine bétaïne), 4,10 (s, CH₂CO amide).

### Composition du mélange

| Méthode de traitement | e | f | g | h |
|---|---|---|---|---|
| B | 58 | 35 | 0 | 10 |

| | | | | |
|---|---|---|---|---|
| e, f, g et h sont exprimés en pourcentage massique du mélange | | | | |

Le produit issu de la méthode de traitement B est chromatographié sur colonne de gel de silice (acétate d'éthyle-isopropanol-eau (6:3:1 puis 5:3:2)) pour donner environ 58 g de mésylate de bétaïnylaminooctadécane. 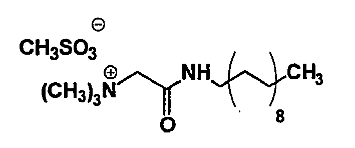 C₂₄H₅₂N₂O₄S; M=464,75 g/mol
Solide blanc; rendement: ≅ 60%
CCM: Rf 0,5 (acétate d'éthyle-isopropanol-eau (5:3:2))
IR (nujol) ν (cm⁻¹): 1680 (Amide I) ; 1578 (Amide II)
RMN ¹H (DMSO):
δ 0,86 (t, 3H, CH₃, ³J 6,8 Hz), 1,25 (sl, 30H, (CH₂)₁₅CH₃), 1,45 (m, 2H, CH₂CH₂NH), 2,37 (s, 3H, CH₃SO₃⁻), 3,10 (m, 2H, CH₂CH₂NH), 3,21 (s, 9H, (CH₃)₃), 4,05 (s, 2H, CH₂CO), 8,64 (s, 1H, NH).
RMN ¹³C (DMSO):
δ 13,40 (CH₃), 21,63, 24,22, 26,01, 28,27, 28,59, 30,88 (CH₂ aliph.), 38,50 (CH₂NH), 39,42 (CH₃SO₃⁻), 53,35 ((CH₃)₃), 64,24 (CH₂CO), 162,66 (CH₂CO).

### Exemple 4: Synthèse du mésylate de bétaïnylaminooctadécényle et préparation du mélange correspondant.

Une suspension de glycine bétaïne (25 g, 0,213 mole) dans le n-butanol (59 ml, 0,64 mole) est réalisée en présence d'acide méthanesulfonique (22,56 g, 0,235 mole). Le mélange réactionnel est porté au reflux du n-butanol à 140 °C. Le milieu devient homogène au bout de 3 à 4 heures d'agitation. Au mélange refroidi à température ambiante est ajoutée de l'amine oléïque (68,5 g, 0,256 mole), puis le n-butanol est éliminé sous pression réduite. L'aminolyse est menée à 130-140 °C sous pression réduite (50 à 100 mbars). Après 3 heures, le milieu est refroidi à température ambiante. Le brut réactionnel obtenu (114 g) constitue une composition tensioactive selon l'invention.
RMN ¹H du brut réactionnel (CDCl₃):
δ 0,86 (t, CH₃ amide + CH₃ sel d'amine + CH₃ amine, ³J 6,7 Hz), 1,29 (sl, CH₃ (CH₂)₆CH₂CH=CHCH₂ (CH₂)₅CH₂CH₂N amide + sel d' amine + amine + CH₂CH₂NH₂ amine), 1,52 (m, CH₂CH₂NH amide), 1, 61 (m, CH₂CH₂NH₃⁺ sel d'amine), 1,98 (m, CH₂CH=CHCH₂ amide + sel d'amine + amine), 2, 67 (t, CH₂CH₂NH₂ amine, ³J 6, 8 Hz), 2, 73 (s, CH₃SO3⁻ amide + CH₃SO₃⁻ sel d'amine + CH₃SO₃⁻ glycine bétaïne), 2,87 (m, CH₂CH₂NH₃⁺ sel d'amine), 3,21 (m, CH₂CH₂NH amide), 3,27 (s, (CH₃)₃ glycine bétaïne), 3,31 (s, (CH₃)₃ amide), 3,77 (s, CH₂CO glycine bétaïne), 4,08 (s, CH₂CO amide), 5, 30 (m, CH₂CH=CHCH₂ amide + sel d'amine + amine).

### Composition du mélange

| Méthode de traitement | e | f | g | h |
|---|---|---|---|---|
| A | 56 | 31 | 8 | 5 |

| | | | | |
|---|---|---|---|---|
| e, f, g et h sont exprimés en pourcentage massique du mélange | | | | |

Le brut réactionnel est chromatographié sur colonne de gel de silice (acétate d'éthyle-isopropanol-eau (6:3:1 puis 5:3:2)) pour donner environ 64 g de mésylate de bétaïnylaminooctadécényle. 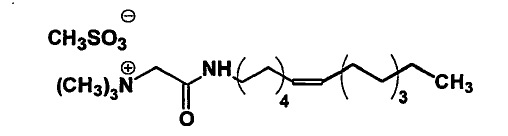 C₂₄H₅₀N₂O₄S; M=462,74 g/mol
Solide amorphe blanc; rendement: ≅ 65%
CCM: Rf 0,52 (acétate d'éthyle-isopropanol-eau (5:3:2))
IR (nujol) ν (cm⁻¹): 1678 (Amide I); 1576 (Amide II); 1640 (C=C)
RMN ¹H (DMSO):
δ 0, 84 (t, 3H, CH₃, ³J 6,7 Hz), 1,23 (sl, 22H, CH₃(CH₂)₆CH₂CH=CHCH₂(CH₂)₅CH₂CH₂NH), 1,40 (m, 2H, CH₂CH₂NH), 1,97 (m, 4H, CH₂CH=CHCH₂), 2,33 (s, 3H, CH₃SO₃⁻), 3,08 (m, 2H, CH₂CH₂NH), 3,20 (s, 9H, (CH₃)₃), 4,07 (s, 2H, CH₂CO), 5,31 (m, 2H, CH₂CH=CHCH₂), 8,61 (s, 1H, NH).
RMN ¹³C (DMSO) :
δ 14, 08 (CH₃), 22, 20, 26,43, 26,65, 26,69, 28,69, 28,73, 28,80, 28,92, 28,96, 29,17, 29,22, 31,38, 32,04 (CH₂ aliph.), 38,66 (CH₂NH), 39,78 (CH₃SO₃⁻), 53,25 ((CH₃)₃), 63,86 (CH₂CO), 129,74, 129,75 (CH₂CH=CHCH₂), 163,19 (CH₂CO).

On donne ci-après les propriétés physico-chimiques de certains dérivés selon l'invention.

### Mesure des tensions superficielles et des concentrations micellaires critiques

Les mesures tensiométriques ont été effectuées à l'aide d'un tensiomètre à goutte selon la méthode de la goutte montante (tensiomètre TRACKER, I.T. CONCEPT).

| Composés amphiphiles | γ_{cmc} (mN/m) | CMC (M) |
|---|---|---|
| Esters | | |
| C_{18:0} | 37,2 | 8.10⁻⁴, |
| Amides | | |
| C_{18:0} | 36,0 | 1,4 .10⁻⁴ |
| Exemples de tensioactifs très utilisés | | |
| APG (C₁₂) | 33,0 | 2,6. 10⁻⁴ |
| SDS (C₁₂) | 30,0 | 8.10⁻³ |

### Stabilité des esters gras de la glycine bétaïne en milieu aqueux

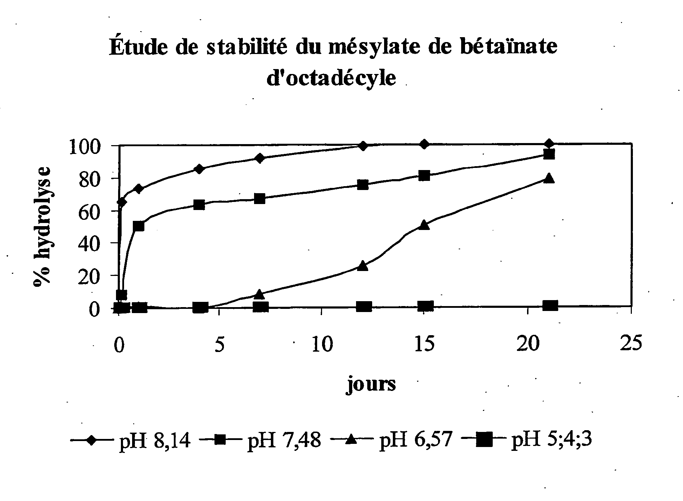

La stabilité du mésylate de bétaïnate d'octadécyle est étudiée en solution aqueuse tampon dont le pH est fixé à diverses valeurs comprises entre 3 et 9. La concentration initiale en tensioactif dans les échantillons tampon est de 3,4.10⁻² Mol/1. L'alcool gras libéré au cours de la réaction d'hydrolyse est extrait à l'éther diéthylique. Après chaque extraction les échantillons sont centrifugés (10 000 tours/min, 10 minutes) pour "casser" les émulsions formées. La solution éthérée est ensuite analysée par chromatographie en phase gazeuse sur colonne AT1 (polydiméthylsiloxane) apolaire en utilisant le n-dodécanol comme étalon interne. Les conditions mises au point sont les suivantes: injecteur à 320 °C, détecteur à 330 °C et gradient de température dans le four; 200 °C (3 min.), 30 °C/min (4 min.), 320 °C (5 min.). La figure unique représente les résultats obtenus.

Le tableau comparatif ci-dessous donne des exemples de formules d'émulsions aqueuses bitumineuses selon l'invention et des résultats d'essais obtenus avec ces formules par comparaison avec une formule témoin.

**TABLEAU COMPARATIF**

| | A | B | C | D | E | F | G | Témoin |
|---|---|---|---|---|---|---|---|---|
| Formules : | | | | | | | | |
| Bitume % | 65,00 | 65,00 | 65,00 | 65,00 | 65,00 | 65,00 | 65,00 | 65,00 |
| AT1 % | 0,36 | | | | | | | |
| AT2 % | | 0,25 | | | | | | 0,28 |
| AT3 % | | | | | 0,52 | | | |
| AT4 % | | | 0,25 | | | | | |
| AT5 % | | | | | | 01,43 | | |
| AT6 % | | | | | | | 0,45 | |
| HCl % | 0,05 | 0,05 | 0,05 | 0,05 | 0,05 | 0,05 | 0,03 | 0,13 |
| Eau % | 3.4, 59 | 34, 70 | 34, 70 | 34, 50 | 34, 43 | 34, 52 | 34, 52 | 34, 59 |

| Résultats : | | | | | | | | |
|---|---|---|---|---|---|---|---|---|
| Indice rupture | 40 | 61 | 44 | 59 | 60 | 58 | 48 | 76 |
| Adhésivité | | | | | | | | |
| 1^{ère} partie | 75 | 100 | 90 | 100 | 100 | 100 | 100 | 90 |
| 2^{ème} partie | 75 | 100 | 90 | 100 | 100 | 100 | 100 | 90 |
| Diamètre médian | 24,3 | 7,5 | 19,9 | 3,8 | 9,8 | 5,4 | 3,5 | 5,9 |
| pH phase aqueuse | 2,2 | 2,3 | 2,4 | 2,6 | 1,7 | 2,6 | 3,4 | 2,6 |
| pH émulsion | 2,5 | 3,1 | 2,9 | 2,9 | 2,0 | 2,8 | 3,5 | |
| Stabilité 7j % | 18,8 | 0,8 | 4,0 | 1, 1 | 2,9 | 0,0 | 6, 1 | 6,5 |
| Teneur liant % | 72,2 | 65,5 | 67,1 | 65,5 | 67,5 | 66,0 | 66,2 | 68 |
| Résidu tamis % | 0,01 | 0,17 | 0,09 | 0,03 | 0,05 | 0,08 | 0,01 | 0 |
| Particules % | 0,17 | 0,16 | 0,11 | 0,13 | 0,09 | 0,09 | 0,03 | 0 |
| Pseudoviscosité | 12 | 52 | 55 | 33 | 17 | 103 | 71 | 9 |
| Teneur en eau % | 34,8 | 34,7 | 35,0 | 35,0 | 35,0 | 34,7 | 34,5 | 35,4 |

Dans le tableau ci-dessus, les produits indiqués dans les formules ont les significations suivantes:
Bitume : 160/220 BP Lavéra.
AT1 : mésylate de bétaïnate d'octadécyle à 72 %
AT2 : mésylate de bétaïnate d'octadécényle à 100 % (produit purifié)
AT3 : mésylate de bétaïnate d'octadécényle à 48 %
AT4 : mésylate de bétaïnylaminooctadécane à 100 % (produit purifié)
AT5 : mésylate de bétaïnylaminooctadécane à 58 %
AT6 : mésylate de bétaïnylaminooctadécényle à 58 %

Les méthodes opératoires des tests pratiqués sur les émulsions sont les suivantes.

### Pour l'indice de rupture: NF EN 13075-1

Pour l'adhésivité: NFT 66-018. Il s'agit du cas d'émulsions à stockage limité sur des gravillons 6/10 Diorites de la Meilleraie, lavés et séchés. La 1^{ère} partie de l'essai est réalisée à la température ambiante, et la 2^{ème} partie de l'essai à 60°C.
Le diamètre médian est déterminé au moyen d'un granulomètre laser de type Coulter LS 100. Il est exprimé en micromètres. Il s'agit d'un mode opératoire propre à la Demanderesse.
Les mesures de pH (pour la phase aqueuse et l'émulsion) ont été réalisées selon un mode opératoire propre au Demandeur.
La stabilité à 7 jours, exprimée en %, a été déterminée par un mode opératoire propre au Demandeur.
Les résidus sur tamis, exprimés en %, ont été déterminés avec un tamis de 0,50 mm conformément à NF EN 1429.
Les particules sont celles comprises entre 0,50 mm et 0,16 mm.
La teneur en eau a été déterminée selon NF EN 1428.
La pseudoviscosité, exprimée en s, a été mesurée à 25°C avec une buse de 4 mm selon NFT 66-020.

Une émulsion aqueuse bitumineuse typique selon l'invention comprend généralement environ 30 à 80 % en poids de bitume, environ 20 à 70 % d'eau et moins de 2 % en poids d'agent tensioactif.

Des valeurs préférentielles sont les suivantes : 60 à 70 % en poids de bitume, 30 à 40 % en poids d'eau et moins de 1 % en poids d'agent tensioactif.

L'émulsion peut comprendre d'autres composants, notamment un acide, en particulier de l'acide chlorhydrique, dans une proportion inférieure à 0,25 % en poids.

La préparation de l'émulsion s'effectue par simple mélange de ses constituants. Le tensioactif est dissous dans l'eau préalablement à la mise en émulsion. Il en va de même pour les autres additifs comme les acides ou les polymères hydrosolubles.

Le bitume utilisé peut être pur ou modifié par l'ajout de polymères. Il peut par ailleurs être fluxé (addition d'une substance susceptible de fluidifier ce bitume) ou non.

La mise en contact sous fort cisaillement, par exemple au moyen d'un moulin, d'une turbine ou d'un mélangeur statique, permet d'obtenir l'émulsion aqueuse de bitume souhaitée.

L'émulsion bitumineuse de l'invention sert avant tout à la préparation de revêtements routiers par mise en contact avec des granulats appropriés, tels que des gravillons, etc.

Dans le cas d'un enduit superficiel, l'émulsion sera répandue sur la chaussée sous forme de film au moyen d'un camion spécialement conçu pour la pulvérisation de quantités contrôlées d'émulsion. Dans la foulée, les granulats sont à leur tour répandus. La rupture de l'émulsion permet l'évacuation de l'eau mais également l'imperméabilisation de la chaussée et le collage des granulats. Ces derniers permettront de rétablir une rugosité de surface propice à une bonne adhérence des véhicules automobiles sur la route.

La mise en contact émulsion/granulats peut également se faire au moyen d'un malaxeur avec ajout ou non d'additifs permettant d'optimiser la qualité de l'enrobage ainsi que la vitesse de rupture de l'émulsion. On parle alors d'enrobés à l'émulsion.

### Exemple 5: Réalisation d'un enrobé

Utilisé seul, le mésylate de bétaïnate d'octadécyle (MBO) conduit à des émulsions utilisables plutôt pour le répandage. En revanche, il est possible de l'utiliser en combinaison avec un polymère hydrosoluble de type alcool polyvinylique (PVOH) afin de stabiliser l'émulsion de bitume. Un compromis de formulation permet d'ajuster l'indice de rupture à une valeur suffisante pour obtenir un bon enrobage tout en contrôlant la vitesse de rupture du fait de la présence du MBO.

Il a ainsi été possible de fabriquer l'émulsion suivante:
- bitume 5070 60 %
- MBO 0,44%
- PVOH 0,7 %
- HCl 0,05%
- H₂O 38,81%

Cette émulsion présente les caractéristiques suivantes :
- pH 2,0
- diamètre médian Laser LS 100 (mm) 2,2
- indice de rupture 140
- résidu sur tamis 0,5 mm (%) 0,54
- particules entre 0,5 et 0,16 mm (%) 0,02

Avec cette formulation, une formulation 0/6 de granulats Delage :
- 0/2 35
- 6/10 30
- 0/4 17,5
- 4/6 17,5
a pu être parfaitement enrobée avec 8,8 % d'émulsion, présentant une vitesse de rupture satisfaisante pour la mise en oeuvre sur chaussée.

## Revendications

1. Émulsion aqueuse bitumineuse contenant du bitume et un agent tensioactif, **caractérisée en ce que** l'agent tensioactif comprend au moins un composé de formule (1)
X⁻ (CH₃)₃N⁺-CH₂-CO-Z-R (1)
X étant un radical sulfonate,
R étant un radical monovalent de formule C₂ₙH₂₍₂ₙ₋ₘ₎₊₁ contenant
2n atomes de carbone et m doubles liaisons, avec 9 ≤ n ≤ 11,
0 ≤ m ≤ 3 si n = 9 et 0 ≤ m ≤ 1 si n > 9, et
Z étant choisi parmi un atome d'oxygène et un groupe -NH-.

2. Émulsion selon la revendication 1, dans laquelle l'agent tensioactif comprend au moins un composé choisi parmi ceux des formules (2), (3) et (4)
RZH (2)
XH (3)
X⁻ (CH₃) ₃N⁺-CH₂-CO-OH (4)
un composé de formule XH étant combiné le cas échéant à au moins un composé de formule RNH₂ pour former au moins un composé de formule X⁻ RN⁺H₃.

3. Émulsion selon la revendication 2, dans laquelle l'agent tensioactif comprend pratiquement exclusivement des composés desdites formules (1), (2), (3) et (4).

4. Émulsion selon l'une des revendications 2 et 3, dans laquelle m = 0 et les composés constituant l'agent tensioactif sont les suivants, dans les pourcentages en poids indiqués:
| | |
|---|---|
| X⁻ (CH₃) ₃N⁺-CH₂-CO-O-R | 50 ± 10 |
| ROH | 19 ± 10 |
| XH | 23 ± 10 |
| X⁻ (CH₃) ₃N⁺-CH₂-CO-OH | 0 à 18. |

5. Émulsion l'une des revendications 2 et 3, dans laquelle m = 0 et les composés constituant l'agent tensioactif sont les suivants, dans les pourcentages en poids indiqués:
| | |
|---|---|
| X⁻ (CH₃) ₃N⁺-CH₂-CO-O-R | 72 ± 10 |
| ROH | 0 à 20 |
| XH | 0 à 18 |
| X⁻ (CH₃)₃N⁺-CH₂-CO-OH | 0 à 20. |

6. Émulsion selon l'une des revendications 2 et 3, dans laquelle m = 0 et les composés constituant l'agent tensioactif sont les suivants, dans les pourcentages en poids indiqués:
| | |
|---|---|
| X⁻ (CH₃)₃N⁺-CH₂-CO-O-R | 80 ± 10 |
| ROH | 20 ± 10. |

7. Émulsion selon l'une des revendications 2 et 3, dans laquelle m = 0 et les composés constituant l'agent tensioactif sont les suivants, dans les pourcentages en poids indiqués:
| | |
|---|---|
| X⁻ (CH₃)₃N⁺-CH₂-CO-O-R | 7 0 ± 10 |
| ROH | 26 ± 10 |
| XH | 0 à 14. |

8. Émulsion selon l'une des revendications 2 et 3, dans laquelle m > 0 et les composés constituant l'agent tensioactif sont les,suivants, dans les pourcentages en poids indiqués:
| | |
|---|---|
| X⁻ (CH₃)₃N⁺-CH₂-CO-O-R | 48 ± 10 |
| ROH | 36 ± 10 |
| XH | 14 ± 10 |
| X⁻ (CH₃) ₃N⁺-CH₂-CO-OH | 0 à 12. |

9. Émulsion selon l'une des revendications 2 et 3, dans laquelle m = 0 et les composés constituant l'agent tensioactif sont les suivants, dans les pourcentages en poids indiqués:
| | |
|---|---|
| X⁻ (CH₃)₃N⁺-CH₂-CO-NH-R | 58 ± 10 |
| X⁻ RN⁺H₃ | 35 ± 10 |
| X⁻ (CH₃)₃N⁺-CH₂-CO-OH | 0 à 20. |

10. Émulsion selon l'une des revendications 2 et 3, dans laquelle m > 0 et les composés constituant l'agent tensioactif sont les suivants, dans les pourcentages en poids indiqués:
| | |
|---|---|
| X⁻ (CH₃)₃N⁺-CH₂-CO-NH-R | 56 ± 10 |
| X⁻ RN⁺H₃ | 31 ± 10 |
| RNH₂ | 0 à 18 |
| X⁻ (CH₃) ₃N⁺-CH₂-CO-OH | 0 à 15. |

11. Émulsion selon l'une des revendications précédentes, dans laquelle X est choisi parmi les radicaux méthanesulfonate, paratoluènesulfonate et camphosulfonate.

12. Émulsion selon l'une des revendications précédentes, comprenant environ 30 à 80 % en poids de bitume, environ 20 à 70 % en poids d'eau et moins de 2 % en poids d'agent tensioactif, préférentiellement 60 à 70 % en poids de bitume, 30 à 40 % en poids d'eau et moins de 1 % en poids d'agent tensioactif.

13. Émulsion selon la revendication 12, comprenant en outre un acide, en particulier de l'acide chlorhydrique, dans une proportion inférieure à 0,25 % en poids de l'émulsion.

14. Émulsion selon l'une des revendications 12 et 13, comprenant en outre un un polymère hydrosoluble, en particulier de l'alcool polyvinylique, dans une proportion de 0,1 à 2 % en poids de l'émulsion.

15. Utilisation d'une émulsion bitumineuse selon l'une des revendications précédentes pour la réalisation d'enduits superficiels, de couches d'accrochage, d'imprégnation, d'enrobés denses, semi-denses, coulés à froid ou stockables.

## Claims

1. Aqueous bitumen emulsion containing bitumen and a surfactant agent, **characterised in that** the surfactant agent comprises at least one compound of formula (1)
X⁻ (CH₃)₃N⁺-CH₂-CO-Z-R (1)
X being a sulphonate radical,
R being a monovalent radical of formula C₂ₙH₂(₂ₙ₋ₘ)₊₁ containing 2n atoms of carbon and m double bonds,with 9 ≤ n ≤ 11, 0 ≤ m ≤ 3 if n=9 and 0 ≤ m ≤ 1 if
n > 9, and
Z being selected from an atom of oxygen and a -NH- group.

2. Emulsion according to claim 1, wherein the surfactant agent comprises at least one compound selected from those with formulae (2), (3) and (4)
RZH (2)
XH (3)
X⁻(CH₃)₃N⁺-CH₂-CO-OH (4)
a compound of formula XH being combined if necessary with at least one compound of formula RNH₂ in order to form at least one compound of formula X-RN⁺H₃.

3. Emulsion according to claim 2, wherein the surfactant agent comprises virtually exclusively compounds of the said formulae (1), (2), (3) and (4).

4. Emulsion according to either of claims 2 or 3, wherein m = 0 and the compounds forming the surfactant agent are as follows, in the percentages by weight indicated:
| | |
|---|---|
| X⁻ (CH₃)₃N⁺-CH₂-CO-O-R | 50 ± 10 |
| ROH | 19 ± 10 |
| XH | 23 ±10 |
| X⁻ (CH₃)₃N⁺-CH₂-CO-OH | 0 to 18. |

5. Emulsion according to either of claims 2 or 3, wherein m = 0 and the compounds forming the surfactant agent are the following, in the percentages by weight indicated:
| | |
|---|---|
| X⁻ (CH₃)₃N⁺-CH₂-CO-O-R | 72 ± 10 |
| ROH | 0 to 20 |
| XH | 0 to 18 |
| X⁻ (CH₃)₃N⁺-CH₂-CO-OH | 0 to 20. |

6. Emulsion according to either of claims 2 or 3, wherein m = 0 and the compounds forming the surfactant agent are the following, in the percentages by weight indicated:
| | |
|---|---|
| X⁻ (CH₃)₃N⁺-CH₂-CO-O-R | 80 ± 10 |
| ROH | 20 ± 10. |

7. Emulsion according to either of claims 2 or 3, wherein m = 0 and the compounds forming the surfactant agent are the following, in the percentages by weight indicated:
| | |
|---|---|
| X⁻ (CH₃)₃N⁺-CH₂-CO-O-R | 70 ± 10 |
| ROH | 26 ± 10 |
| XH | 0 to 14. |

8. Emulsion according to either of claims 2 or 3, wherein m > 0 and the compounds forming the surfactant agent are the following, in the percentages by weight indicated:
| | |
|---|---|
| X⁻ (CH₃)₃N⁺-CH₂-CO-O-R | 48 ± 10 |
| ROH | 36 ± 10 |
| XH | 14 ± 10 |
| X⁻ (CH₃)₃N⁺-CH₂-CO-OH | 0 to 12. |

9. Emulsion according to either of claims 2 or 3, wherein m = 0 and the compounds forming the surfactant agent are the following, in the percentages by weight indicated:
| | |
|---|---|
| X⁻ (CH₃)₃N⁺-CH₂-CO-NH-R | 58 ± 10 |
| X⁻ RN⁺H₃ | 35 ± 10 |
| X⁻ (CH₃)₃N⁺-CH₂-CO-OH | 0 to 20. |

10. Emulsion according to either of claims 2 or 3, wherein m > 0 and the compounds forming the surfactant agent are the following, in the percentages by weight indicated:
| | |
|---|---|
| X⁻ (CH₃)₃N⁺-CH₂-CO-NH-R | 56 ± 10 |
| X⁻ RN⁺H₃ | 31 ± 10 |
| RNH₂ | 0 to 18 |
| X⁻ (CH₃)₃N⁺-CH₂-CO-OH | 0 to 15. |

11. Emulsion according to one of the preceding claims, wherein X is selected from methanesulphonate, paratoluenesulphonate and camphosulphonate.

12. Emulsion according to one of the preceding claims, comprising about 30 to 80% by weight bitumen, about 20 to 70% by weight water and at least 2% by weight surfactant agent, preferably 60 to 70% by weight bitumen, 30 to 40% by weight water and at least 1% by weight surfactant agent.

13. Emulsion according to claim 12, further comprising an acid, in particular hydrochloric acid, in a proportion of less than 0.25% by weight of the emulsion.

14. Emulsion according to either of claims 12 or 13, further comprising a watersoluble polymer, in particular polyvinyl alcohol, in a proportion of 0.1 to 2% by weight of the emulsion.

15. Use of a bitumen emulsion according to one of the preceding claims for forming surface coatings, bonding layers, impregnation layers, dense coated materials, semi-dense coating materials which are cold-cast or storable.

## Patentansprüche

1. Wäßrige Bitumenemulsion enthaltend Bitumen und ein Tensid, **dadurch gekennzeichnet, daß** das Tensid wenigstens eine Verbindung der Formel (1) umfaßt:
X⁻ (CH₃)₃N⁺-CH₂-CO-Z-R (1)
wobei
X ein Sulfonatrest ist,
R ein einwertiger Rest der Formel C₂ₙH₂₍₂ₙ₋ₘ₎₊₁ ist, der 2n Kohlenstoffatome und m Doppelbindungen enthält, und 9 ≤ n ≤ 11, 0 ≤ m ≤ 3 falls n = 9 und 0 ≤ m ≤ 1 falls n > 9, und
Z aus einem Sauerstoffatom und einer Gruppe -NH- ausgewählt ist.

2. Emulsion gemäß Anspruch 1, wobei das Tensid wenigstens eine aus den Formeln (2), (3) und (4) ausgewählte Verbindung umfaßt
RZH (2)
XH (3)
X⁻ (CH₃)₃N⁺-CH₂-CO-OH (4)
und eine Verbindung XH gegebenenfalls mit wenigstens einer Verbindung der Formel RNH₂ unter Bilden wenigstens einer Verbindung der Formel X⁻ RN⁺H₃ verbunden ist.

3. Emulsion gemäß Anspruch 2, wobei das Tensid praktisch ausschließlich Verbindungen der Formeln (1), (2), (3) und (4) umfaßt.

4. Emulsion gemäß einem der Ansprüche 2 und 3, wobei m = 0 und die das Tensid darstellenden Verbindungen die folgenden in den angegebenen Prozentanteilen sind:
| | |
|---|---|
| X⁻ (CH₃)₃N⁺-CH₂-CO-O-R | 50 ± 10 |
| ROH | 19 ± 10 |
| XH | 23 ± 10 |
| X⁻ (CH₃)₃N⁺-CH₂-CO-OH | 0 bis 18. |

5. Emulsion gemäß einem der Ansprüche 2 und 3, wobei m = 0 und die das Tensid darstellenden Verbindungen die folgenden in den angegebenen Prozentanteilen sind:
| | |
|---|---|
| X⁻ (CH₃)₃N⁺-CH₂-CO-O-R | 72 ± 10 |
| ROH | 0 - 20 |
| XH | 0 - 18 |
| X⁻ (CH₃)₃N⁺-CH₂-CO-OH | 0 bis 20. |

6. Emulsion gemäß einem der Ansprüche 2 und 3, wobei m = 0 und die das Tensid darstellenden Verbindungen die folgenden in den angegebenen Prozentanteilen sind:
| | |
|---|---|
| X⁻ (CH₃)₃N⁺-CH₂-CO-O-R | 80 ± 10 |
| ROH | 20 ± 10. |

7. Emulsion gemäß einem der Ansprüche 2 und 3, wobei m = 0 und die das Tensid darstellenden Verbindungen die folgenden in den angegebenen Prozentanteilen sind:
| | |
|---|---|
| X⁻ (CH₃)₃N⁺-CH₂-CO-O-R | 70 ± 10 |
| ROH | 26 ± 10 |
| XH | 0 bis 14. |

8. Emulsion gemäß einem der Ansprüche 2 und 3, wobei m > 0 und die das Tensid darstellenden Verbindungen die folgenden in den angegebenen Prozentanteilen sind:
| | |
|---|---|
| X⁻ (CH₃)₃N⁺-CH₂-CO-O-R | 48 ± 10 |
| ROH | 36 ± 10 |
| XH | 14 ± 10 |
| X⁻ (CH₃)₃N⁺-CH₂-CO-OH | 0 bis 12. |

9. Emulsion gemäß einem der Ansprüche 2 und 3, wobei m = 0 und die das Tensid darstellenden Verbindungen die folgenden in den angegebenen Prozentanteilen sind:
| | |
|---|---|
| X⁻ (CH₃)₃N⁺-CH₂-CO-NH-R | 58 ± 10 |
| X⁻ RN⁺H₃ | 35 ± 10 |
| X⁻ (CH₃)₃N⁺-CH₂-CO-OH | 0 bis 20. |

10. Emulsion gemäß einem der Ansprüche 2 und 3, wobei m > 0 und die das Tensid darstellenden Verbindungen die folgenden in den angegebenen Prozentanteilen sind:
| | |
|---|---|
| X⁻ (CH₃)₃N⁺-CH₂-CO-NH-R | 56 ±10 |
| X⁻ RN⁺H₃ | 31 ± 10 |
| RNH₂ | 0 bis 18 |
| X⁻ (CH₃)₃N⁺-CH₂-CO-OH | 0 bis 15. |

11. Emulsion gemäß einem der vorangehenden Ansprüche, bei der X aus den Resten Methansulfonat, p-Toluolsulfonat und Camphersulfonat ausgewählt ist.

12. Emulsion gemäß einem der vorangehenden Ansprüche, die etwa 30 bis 80 Gew.-% Bitumen, etwa 20 bis 70 Gew.-% Wasser und mindestens 2 Gew.-% Tensid, vorzugsweise 60 bis 70 Gew.-% Bitumen, 30 bis 40 Gew.-% Wasser und mindestens 1 Gew.-% Tensid umfaßt.

13. Emulsion gemäß Anspruch 12, die außerdem eine Säure, insbesondere Salzsäure in einem Anteil unter 0,25 Gew.-% der Emulsion umfaßt.

14. Emulsion gemäß einem der Ansprüche 12 und 13, die außerdem ein wasserlösliches Polymer, insbesondere Polyvinylalkohol in einem Anteil von 0,1 bis 2 Gew.-% der Emulsion umfaßt.

15. Verwendung einer Bitumenemulsion gemäß einem der vorangehenden Ansprüche zur Herstellung von Beschichtungen, Haft- oder Imprägnierschichten und schweren, halbschweren, kaltvergossenen oder haltbaren Straßendecken.
